# EUROPEAN PATENT SPECIFICATION

(11) **EP 3 953 542 B1**
(45) Date of publication and mention of the grant of the patent: **03.07.2024**
(21) Application number: 20726519.0
(22) Date of filing: 08.04.2020
(51) Int. Cl.: E04G 7/22, E04G 7/28, E04G 7/30, E04G 7/34, E04H 3/24, E04B 1/24, G06F 1/26

(54) **A CONNECTOR FOR A MODULAR DECKING SYSTEM AND A MODULAR DECKING SYSTEM COMPRISING THE SAME**
VERBINDER FÜR EIN MODULARES DECKSYSTEM UND MODULARES DECKSYSTEM DAMIT
CONNECTEUR POUR SYSTÈME DE PLANCHER MODULAIRE ET SYSTÈME DE PLANCHER MODULAIRE LE COMPRENANT

(30) Priority: 09.04.2019 GB 201905016
(43) Date of publication of application: 16.02.2022
(73) Proprietor: Nononsense (Group) Ltd, Colyton, Devon EX24 6JU (GB)
(72) Inventor: RICHARDS, Stephen James, Lynton, Devon EX35 6DF (GB)
(74) Representative: Wilson Gunn
(86) International application number: PCT/GB2020/050914
(87) International publication number: WO 2020/208351

(56) References cited:
- EP-A2- 0 126 657
- WO-A1-2009/147004
- WO-A1-2018/186756
- WO-A2-2019/063828
- CN-A- 101 892 740
- CN-A- 104 763 717
- DE-A1- 3 617 020
- US-A1- 2011 079 464

## Description

### Technical Field of the Invention

The present invention relates to a connector for a modular decking system, to a modular decking system comprising the connector and to a method of assembling a modular decking system using the connector.

### Background to the Invention

Modular decking systems are typically used in the construction of temporary or permanent structures such a stages for musicians, actors and other live performers. Modular decking systems generally comprise a plurality of vertical and horizontal supports which are arranged and connected at their respective ends to produce a frame that is capable of supporting a plurality of decking panels. The ends of the vertical and horizontal supports are typically connected by suitable fastening means, e.g. a clamp on bracket connection, a socket to bracket connection or a pin to bracket connection, meaning skilled or trained personnel are required to assemble such modular decking systems with appropriate tools. Moreover, the use of such fastening means to connect the vertical and horizontal supports limits the loads that can be applied at these connection points, which is undesirable. Most modular decking systems are often used in conjunction with a scaffolding sub-structure to achieve the desired stage height. However, a problem with known scaffolding systems is that they have a tendency to deflect when placed under high loads. This not only reduces the stability of the modular decking system, but also hinders the assembly of structures being built on the decking since it becomes increasingly difficult to align and connect the structures WO 2018/186756 A1 discloses a method of assembling a modular decking system, a modular decking system and a connector, the connector comprising an elongate tube and a connection hub with formations.

It is an object of the embodiments of the present invention to provide a modular decking system that can be assembled without using tools and by installers with limited labour skills.

It is another object of embodiments of the present invention to provide a modular decking system that is less susceptible to deflection.

It is also an object of embodiments of the present invention to provide a modular decking system that is able to withstand greater loads.

### Summary of the Invention

Aspects of the invention are recited in the appended independent claims.

In an aspect of the invention according to claim 1, there is provided a modular decking system comprising:
- a decking panel;
- a plurality of vertical supports;
- at least two first horizontal supports;
- at least two second horizontal supports arranged perpendicular to the first horizontal supports;
- one or more third horizontal supports arranged between the first horizontal supports and parallel to the second horizontal supports, and
- a plurality of connectors for detachably coupling the first and second horizontal supports, the connectors comprising a connection hub having formations that enable the connection hub to slidingly engage with a reciprocating formation, present at the end of the first and second horizontal supports, a base plate, a top plate and an elongate tube adapted for insertion into the vertical supports which protrudes beyond the top plate, whereby the formations are welded to the elongate tube, extend axially between the top plate and the base plate and are arranged around the periphery of the elongate tube, the reciprocating formations, at the respective ends of the first and second horizontal supports, are slidingly engaged with the formations of the connection hub and the top plate is adapted to accommodate the formations and comprises correspondingly shaped cut outs.

The disclosed modular decking system enables a stage or decked flooring system to be erected over a varied topographical ground condition & substrate type, whilst maintaining complete structural integrity (irrespective of height) over side sway and support of both vertical & lateral loading, whilst maintaining a flat horizontal working platform. Moreover, the design of the components and the way in which they are secured together permits the use of local unskilled labour with minimum supervision, meaning the modular decking system can be erected easily, quickly and at reduced cost relative to conventional decking systems.

The connection hub formations are formed around the elongate tube. The connection hub formations are welded to the elongate tube. The connector is adapted for insertion into a vertical support of a scaffolding sub-structure. In addition to connecting the first and second horizontal supports together, the connection hub is configured to gather loads from the first and second horizontal supports and distribute them to the ground in a very efficient manner. This in turn allows the system to achieve very high decking loads.

The connection hub comprises a base plate and a top plate. The provision of the base plate and top plate increased the rigidity and overall strength of the connection hub. In use, the reciprocating ends of the first and second horizontal supports rest on and are supported by the base plate. The top plate and the base plate may be configured to fit around the elongate tube.

The elongate tube extends through and protrudes beyond the top plate. In particular, the elongate tube extends beyond an upper surface of the top plate. In use, decking boards, which have a cut-out corresponding to the size and shape of the vertical tube, are fitted and locked in position around the elongate tube protrusion. The decking boards have two functions, namely to provide a flat surface for the desired application and to provide force translation through the boards, which enables the decking system to withstand greater loads. Such an arrangement also helps to achieve squareness of the decking boards and rigidity across the floor.

The connection hub may comprise a plurality of braces/struts. The braces/struts may be spaced around the elongate tube. The braces/struts may extend between the underside of base plate and the elongate tube. The braces may be angled. In particular, the braces may be angled between 30° and 60°. In some embodiments the braces may be angled between 40° and 50°. For example, the braces may be angled at 45°. The braces allow the generated loads to be distributed away from the connection hub and into the decking structure which allows for loadings of up to 184 kN per connection hub, which is much higher than normal loadings (~5kN). The loads typically include dead loads, live loads, seismic loads and wind loads.

In addition to being insertable into a vertical support, the connection hub may be adapted to receive a vertical support which enables modular decking systems of increasing height to be built easily, quickly and with increased rigidity and strength. In some embodiments the vertical support may be a handrail stanchion.

The connection hub may comprise at least four formations for receiving reciprocating formations formed at the ends of the first and second horizontal supports. In some embodiments, the connection hub may comprise at least eight formations for reciprocating formations formed at the ends of the first and second horizontal supports. This enables decking beams to be installed at 45°, while allowing plan bars and braces to be attached to provide additional strength and rigidity to the decking structure.

The connection hub may comprise a female part and the ends of the first and second horizontal supports may each comprise a reciprocating male part for sliding engagement with the female part. In other embodiments the connection hub may comprise a male part and the ends of the first and second horizontal supports may each comprise a reciprocating female part for sliding engagement with the male part.

Irrespective of whether the male part is present at the ends of the horizontal supports or whether it projects radially outwards from the connection hub, the male part may have a circular cross-section, a diamond-shaped cross-section, a square-shaped cross-section or a rectangular-shaped cross-section when viewed in plan. The male part may be connected to the first and second horizontal supports or to the connection hub via a stem. The female part may have a substantially C-shaped cross-section when viewed in plan.

The male part or the female part of the connection hub extends axially between the top plate and the base plate.

In some embodiments it may be desirable to erect a more permanent decking structure. Accordingly, the respective ends of the first and second horizontal supports may be secured to the connection hub by fastening means. The fastening means may comprise a bolted connection, in which case, the connection hub formations and the reciprocating formations located at the ends of the horizontal supports may comprise apertures for receiving the fastening means.

The first and third horizontal supports may each comprise means for fixing the third horizontal supports to the first horizontal supports. In particular, the first horizontal supports may be provided with U-shaped brackets which are adapted to receive a coupling part present at the ends of the third horizontal supports. In some embodiments, the end of the third horizontal supports may comprise an overhang portion from which the coupling part downwardly depends. The coupling part may be substantially J-shaped or hook-shaped. When a more permanent structure is desired, the U-shaped brackets may be provided with orifices and the ends of the third horizontal support may be provided with corresponding orifices which are configured to receive a bolt or other suitable fastening means therethrough, i.e. the orifices replace the overhang portions and J-shaped or hook-shaped coupling part.

A portion of each decking panel may be secured between the top plate of the connection hub and a decking panel retainer. In particular, each corner of the decking panel may be secured between the top plate and the decking panel retainer. The decking panel retainer may be circular. The decking panel retainer may additionally comprise a central hole or a cut out which allows a vertical support to be inserted into the connection hub.

A portion of each decking panel may be secured between a captivation details located on the top surface of the first horizontal support and a decking panel retainer. The captivation detail may have a substantially circular cross-section. The captivation detail may be positioned on the top surface of the first horizontal support between two U-shaped brackets. The captivation detail may be welded to the top surface of the first horizontal support.

Due to the increased loadings the modular decking system can withstand the modular decking is suitable for use as a structural building support. Accordingly, in some embodiments, the modular decking system may comprise a tower or column. The tower or column may be secured to two or more third horizontal supports. The third horizontal supports to which the tower or column are secured may be fixed to the first horizontal supports by a bolted connection. The modular decking system may therefore comprise third horizontal supports that are pinned/bolted to the first horizontal supports as well as third horizontal supports that comprise a coupling part that rotationally engages a bracket provided on the first horizontal support.

According to a further aspect of the invention according to claim 10, there is provided a connector for a modular decking system, the connector comprising an elongate tube adapted for insertion into a vertical support and a connection hub that comprises formations that enables the connection hub to slidingly engage with reciprocating formations present at the ends of two or more horizontal supports, the connection hub comprises a top plate beyond which the elongate tube protrudes and a base plate on which the horizontal supports rest in use, wherein the top plate is adapted to accommodate the formations and comprises correspondingly shaped cut outs, the formations are welded to the elongate tube, extend axially between the top plate and the base plate and are arranged around the periphery of the elongate tube.

The connector is adapted for insertion into a vertical support of a scaffolding sub-structure. Advantageously the connector is insertable into a variety of scaffold systems selected from the group comprising Kwikstage, Cuplok, Scaffold Tube, Haki, Layher Ringlok, Alpac Ringlok, Futuro Ringlok, Metric Ringlok, Alround Ringlok, Turner + 8 Co planer.

The connector comprises a base plate on which the horizontal supports rest in use. The connection hub may be adapted to receive a vertical support member. The vertical support may comprise a handrail stanchion.

The connection hub comprises a female part or a male part adapted for sliding interengagement with the respective ends of the horizontal supports. The male part or female part may extend axially between a top plate of the connection hub and the base plate.

The male part may have a circular cross-section, a diamond-shaped cross-section, a square-shaped cross-section or a rectangular-shaped cross-section when viewed in plan. The male part may be connected to the first and second horizontal supports or to the connection hub via a stem. The female part may have a substantially circular cross-section, a diamond-shaped cross-section, a square-shaped cross-section or a rectangular-shaped cross-section or C-shaped cross-section when viewed in plan.

The connection hub may comprise an aperture which is configured to receive a fastener for securing the connection hub and the respective ends of the horizontal supports together. The connection hub may comprise a plurality of apertures for receiving a corresponding number of fasteners. The fasteners may comprise a bolted connection, in which case the apertures are configured to receive an appropriately sized bolt which is retained in place by a nut.

According to another aspect of the invention according to claim 14, there is provided a method of assembling a modular decking system, the method comprising the steps of:
- providing a plurality of vertical supports;
- inserting a connector into each vertical support, wherein each connector comprises an elongate tube adapted for insertion into the vertical support and a connection hub adapted to enable interconnection of a first horizontal support and a second horizontal support; and a second horizontal support, wherein the connection hub comprises formations that enable the connection hub to slidingly engage with reciprocating formations present at the ends of the first and second horizontal supports, whereby the connection hub comprises a top plate beyond which the elongate tube protrudes and a base plate on which the horizontal supports, rest in use, wherein the top plate is adapted to accommodate the formations and comprises correspondingly shaped cut outs, the formations are welded to the elongate tube, extend axially between the top plate and the base plate and are arranged around the periphery of the elongate tube;
- interconnecting the first horizontal support and the second horizontal support to the connection hub through sliding interengagement;
- fixing one or more third horizontal supports between a pair of parallel first horizontal supports to define a support frame, and
- securing one or more decking panels to the support frame.

The step of fixing the third horizontal support to the first horizontal support may comprise rotating the third or each third horizontal support relative to the first horizontal supports.

The method may comprise the additional step of securing the ends of the first and/or second horizontal supports to the connection hub using a bolted connection.

Disclosed herein, but not forming part of the invention, there is provided a horizontal support adapted to rotationally engage with first horizontal supports of a modular decking system to secure the third horizontal support between the first horizontal supports.

The horizontal support may incorporate any or all of the features described in relation to the disclosed modular decking system and/or the disclosed method.

### Detailed Description of the Invention

In order that the invention may be more clearly understood one or more embodiments thereof will now be described, by way of example only, with reference to the accompanying drawings, of which:
- Figure 1 invention;: shows an isometric view of a connector not according to the
- Figures 2A-2B: respectively show plan and elevation views of first horizontal support;

- Figure 3: shows a perspective view of the first horizontal support shown in Figure 2
- Figures 4A-4D: show plan views of reciprocating formations for the connection hub and the first horizontal support;

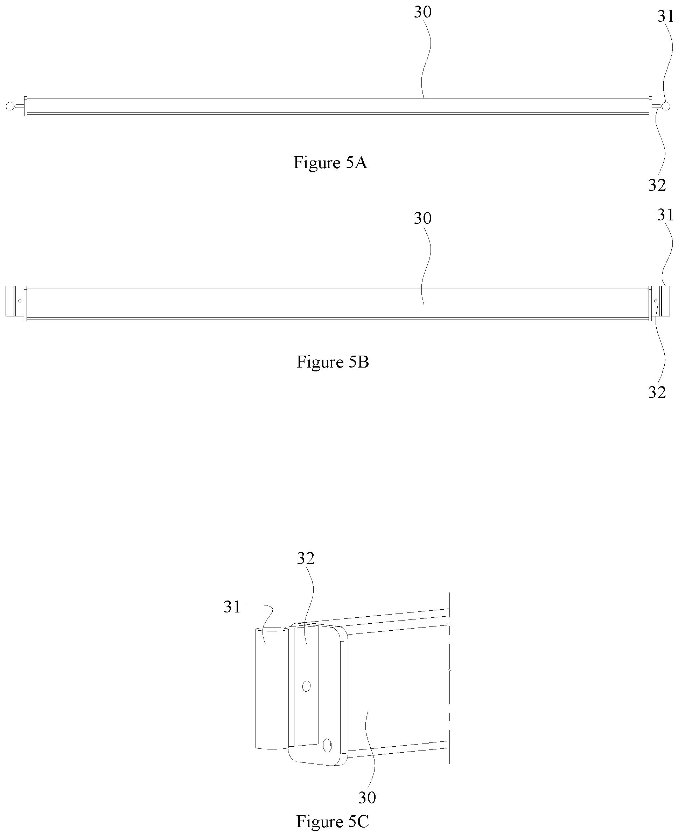

- Figures 5A-5C: respectively show plan, elevation and perspective views of a second horizontal support;
- Figure 6: shows an isometric view of a horizontal support retained in the connection hub not according to the invention;
- Figure 7: shows an elevation view of the third horizontal support;
- Figure 8: shows an end of the third horizontal support comprising an overhang portion and coupling part;
- Figure 9: shows an isometric view of a deck bay comprising modular decking system;
- Figure 10: shows an isometric view of the deck bay shown in Figure 9 with a handrail;
- Figure 11: shows an isomeric view of a connector not according to the invention for use in a more permanent modular decking system involving fasteners;
- Figures 12A-12B: respectively show elevation and perspective views of the first horizontal support for use in a more permanent decking system involving fasteners;
- Figure 13: shows an elevation view of a second horizontal support for use in a more permanent decking system involving fasteners.
- Figure 14: shows a method of securing a first horizontal support to the connection hub, and
- Figure 15: shows a method of securing a third horizontal support to a first horizontal support.

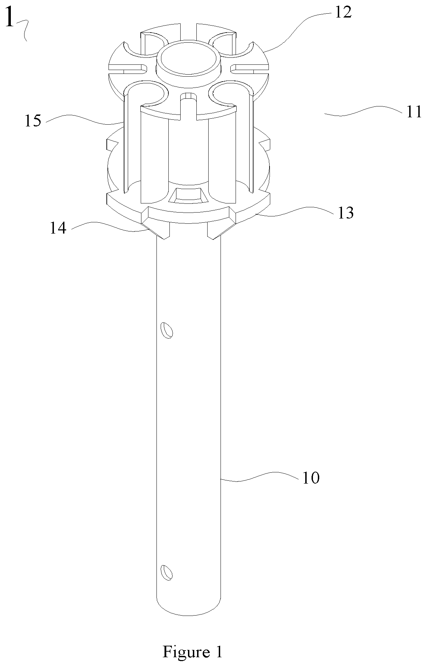

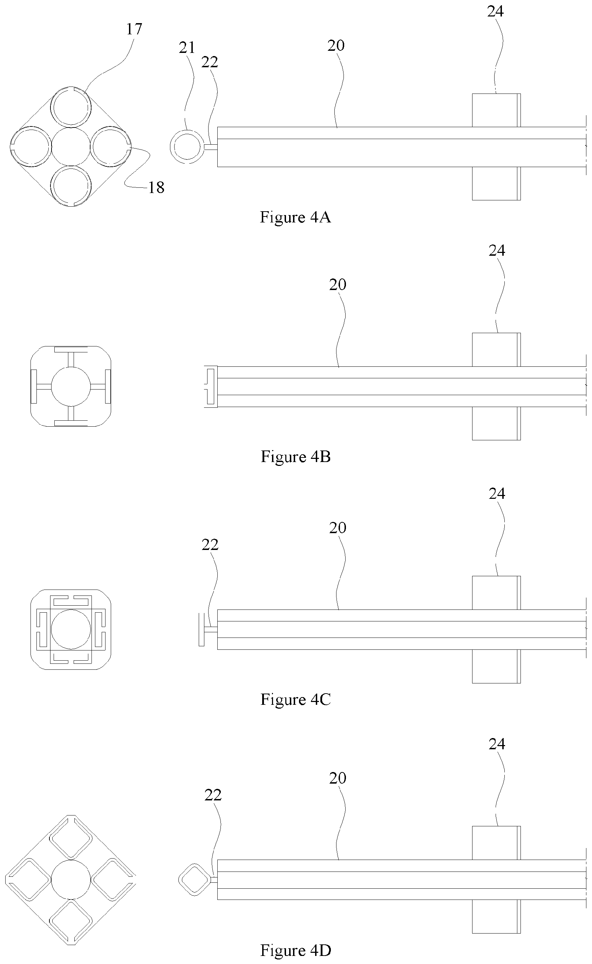

As shown in Figure 1 there is provided a connector 1 for a modular decking system. The connector 1 comprises an elongate tube 10 having a head portion and a tail portion. The head portion of the connector comprises a connection hub 11. The connection hub comprises a top plate 12 and a base plate 13 which is supported by a plurality of braces/struts 14. The braces/struts 14 are provided between the underside of the base plate and the vertical tube at an angle of 45°. The elongate tube 10 extends through and protrudes beyond the top plate 12. The connection hub 11 also comprises a plurality of formations 15 which are arranged around the periphery of the elongate tube 10 and extend axially between the top plate 12 and the base plate 13. As best shown in Figure 1 the top plate 12 is adapted to accommodate the formations 15 and comprises correspondingly shaped cut outs. Examples of connection hub formations are shown in Figures 4A-4D. For instance, the connection hub formations may be substantially tubular (female part) substantially diamond-shaped (female part), rectangular (female part) or T-shaped (male part).

The connection hub formations 15 in this embodiment are configured to slidingly engage with reciprocating formations present at the ends of a first horizontal beam 20 and a second horizontal beam 30. Exemplary reciprocating formations 21, 31 are shown in Figures 4A-4D. In this embodiment the connection hub formation 15 comprises a hollow tube 17 with a gap 18 which extends axially from one end of the tube to the other. The reciprocating formation 21, 31 is in the form of a solid cylinder which it dimensioned to fit within the interior of the hollow tube 17. The cylinder 21, 31 is connected to the first and second horizontal beams 20, 30 via a stem 22, 32 and the stem 22, 32 is configured to slide along the axial gap 18 formed in the wall of the hollow tube 17 until the base of the cylinder 21, 31 abuts the base plate 15 of the connection hub 11.

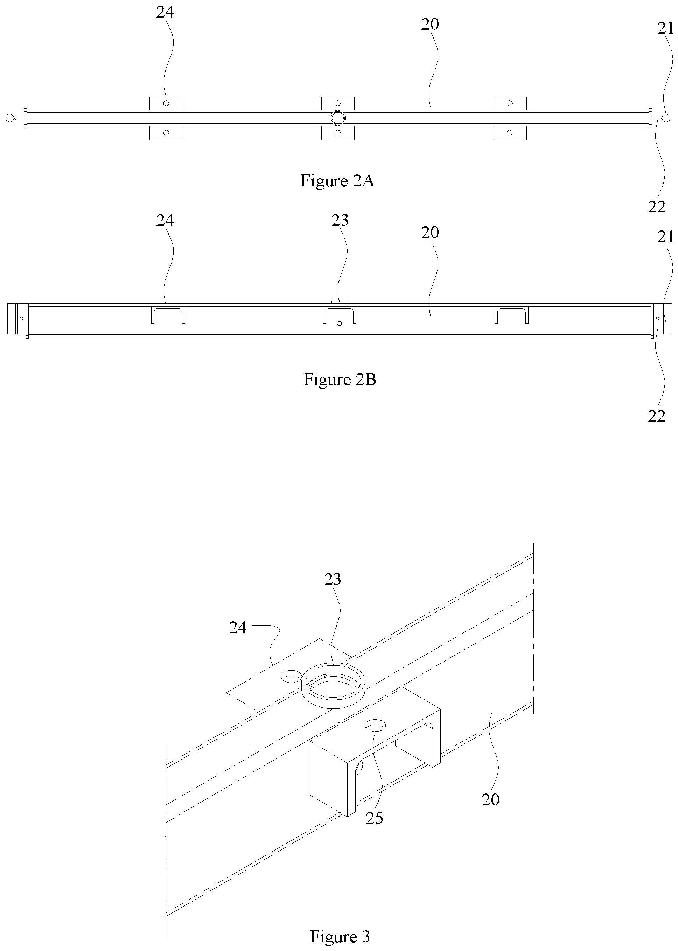

As best shown in Figures 2 and 3, the first horizontal beam 20 comprises a circular captivation detail 23 for retaining a decking board in use. The captivation detail 23 is welded to the top surface of the first horizontal beam 20. On either side of the first horizontal beam 20 there is provided a pair of spaced apart brackets 24. Each bracket pair is substantially aligned with a respective captivation detail 23. The brackets 24 are substantially U-shaped and comprise an aperture 25 in the bridging section spanning the two legs.

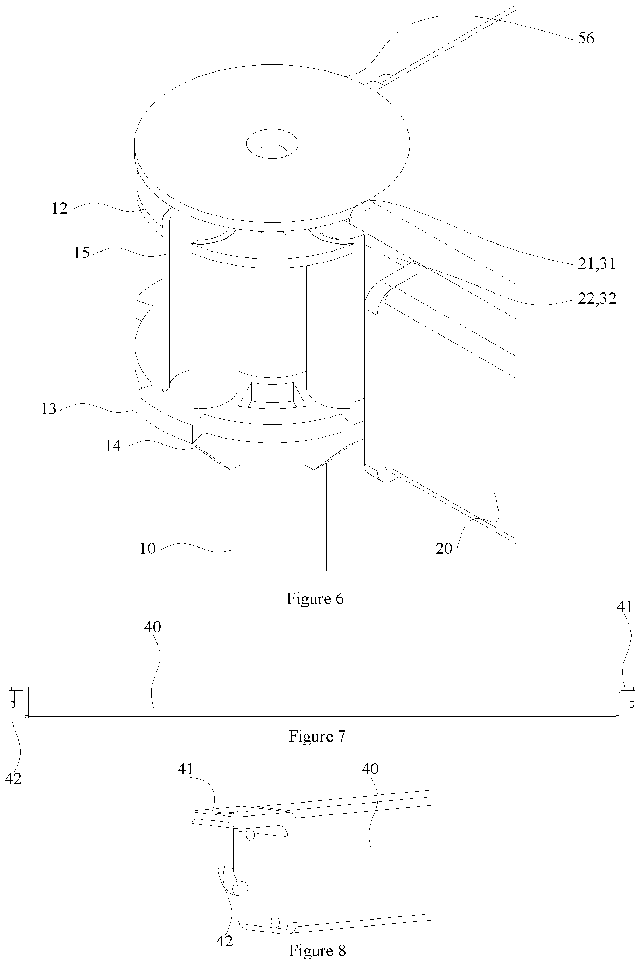

Figures 7 and 8 show a third horizontal beam 40. Each end the third horizontal beam 40 comprises an overhang portion 41 which extends axially outwards from the third horizontal beam 40. As best shown in Figure 8, a J-shaped appendage 42 is attached to the underside of the overhang portion 41. The J-shaped appendage 42 is configured for insertion into the bracket aperture 25, and in use helps secure the third horizontal beam 40 to the first horizontal beam 20.

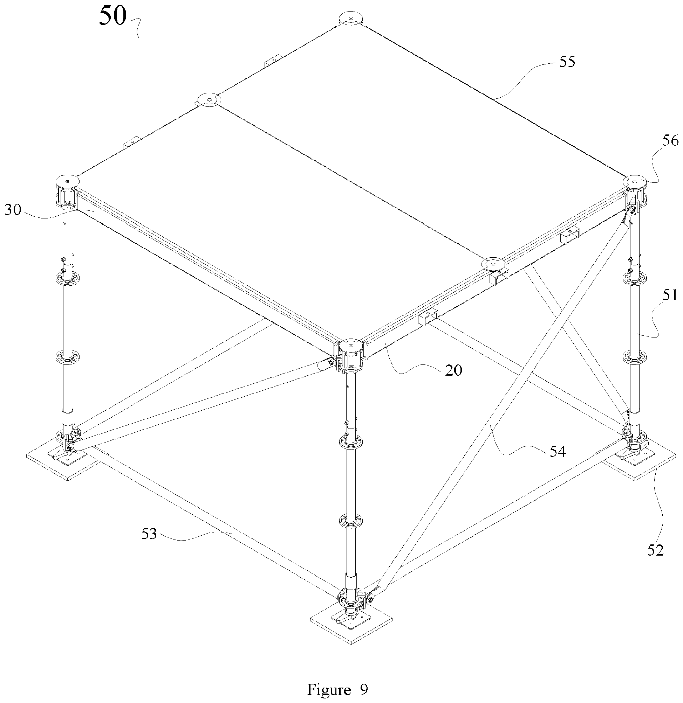

Figure 9 shows a deck bay 50 formed from the modular decking system. The deck bay 50 comprises a scaffolding sub-structure which includes four vertical tubes 51. The lowermost end of each vertical tube is connected to a scaffold base plate 52 via a shank which extends upwardly from the centre of the base plate into the interior of the vertical tube 51. Four horizontal tubes 53 are connected to the lower ends of the vertical tubes via couplers. The scaffolding sub-structure additionally comprises four cross-braces 54. Each cross brace extends diagonally from a lower end of one vertical tube 51 to an upper end of and adjacent vertical tube 51.

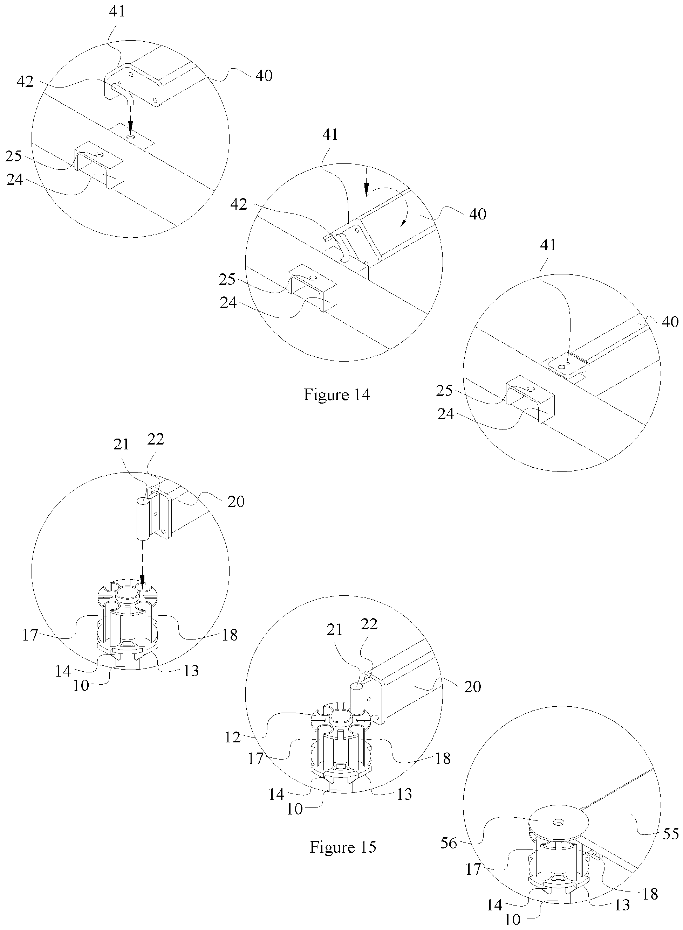

The tail end of the connector 1 is inserted into the upper end of vertical tube 51. As best shown in Figure 9, the first and second horizontal beams 20, 30 extend between the connectors 1. The third horizontal beams 40 extend between the first horizontal beams 20. As best shown in Figure 15, to connect the first horizontal beam 20 to the connector 1, one end of the first horizontal beam 20 is positioned above the connection hub 11. Then the cylinder 21 is brought into alignment with the hollow tube 17 of the connection hub 11 while also ensuring that the stem 22 is suitably aligned with the gap 18. Once aligned, the cylinder 21 is lowered into the hollow tube 17 until it abuts the base plate 13 of the connection hub 11. This process is then repeated to secure the cylinder 21 at the opposite end of the first horizontal beam 20 within a hollow tube 17 of an adjacent connection hub 11. The same process of sliding engagement is repeated to secure the second horizontal beams 20 between adjacent connection hubs 11. Advantageously, securing the first and second beams 20, 30 to the connection hub 11 by sliding engagement avoids the need for pins, bolts and tools.

Next, the third horizontal beams 40 are secured between the first horizontal beams 20 (Figure 14). This is achieved by inserting the free end of the J-shaped appendage 42 into the aperture 25 formed in the U-shaped bracket 24. In particular, the J-shaped appendage 42 is rotated into place as the third horizontal beam 40 is lowered into position. This not only secures the beams 20, 40 together, it also prevents the first horizontal beam 20 from rotating which gives it more strength and allows it to be of a lighter gauge.

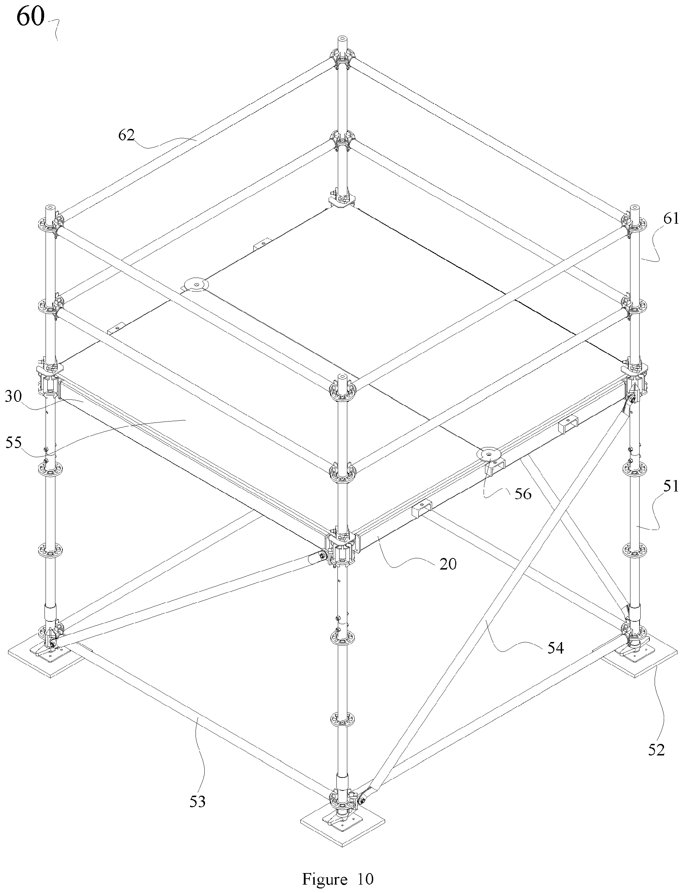

As best shown in Figure 10, the decking bay may comprise handrails 60. If desired, handrail stanchions 61 are inserted into the head portion of the elongate tube 10 and horizontal handrail tubes 62 are arranged between and secured to the handrail stanchions by couplers. Decking panels 55 are then arranged to overlie the connection hub 11 and the captivation details 23 on the first horizontal beams 20. If the decking bay 50 comprises handrail stanchions 61 then the decking panels 55 may be secured to the connection hub 11 using a decking panel clamp which is connected to the handrail stanchion 61. In the absence of handrail stanchions 61, the corners of the decking panel 55 may be secured to connection hub 11 using a decking panel retainer 56. Decking panel retainers 56 are nevertheless used to secure the decking panels 56 to the top surface of the first horizontal beams 20 and as shown in Figures 9 and 10 these overlie the captivation details 23.

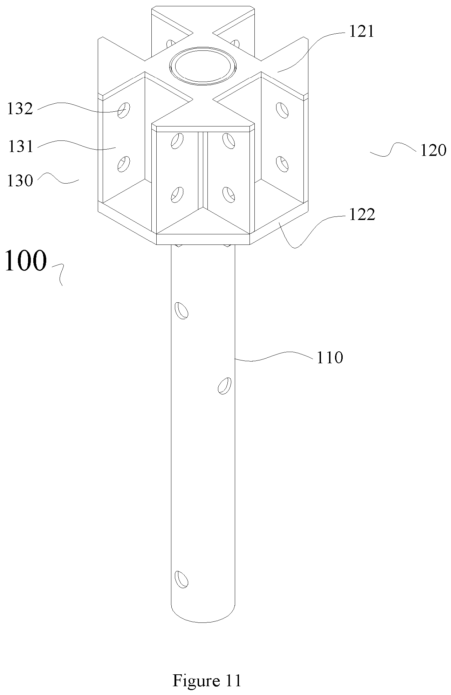

In alternative embodiments a more permanent modular decking system may be erected. Such systems may comprise the connector 100 shown in Figure 11, not forming part of the invention, which comprises an elongate tube 110 adapted for insertion into a vertical support and a connection hub 120 having a base plate 121 and a top plate 122. This connection hub 120 comprises formations 130 which are shaped to receive the ends of the first and second horizontal beams 140, 150 rather than a connection detail extending therefrom as in the previous embodiment described hereinabove. As shown in Figure 11-13, the walls 131 of the formations 130 comprise holes 132 and the ends of the first and second horizontal beams 140, 150 also comprise holes 141, 151 which are arranged for receiving fastening means such as bolts.

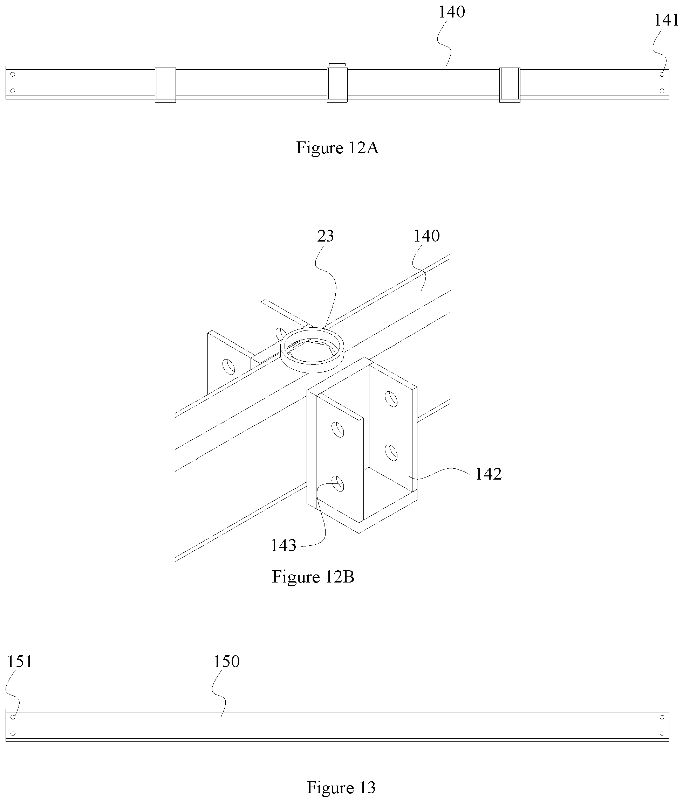

In this embodiment, the second horizontal beams 150 extend between adjacent connection hubs 120 and between the first horizontal beams 140, i.e. they replace the third horizontal beams 40. To secure the second horizontal beams 150 between the first horizontal beams 140 each leg of the U-shaped bracket 142 is adapted to comprise holes 143 for receiving fastening means such as a bolt from a bolted connection. As best shown in Figure 12B, the U-shaped bracket 142 in this embodiment is also inverted relative to the U-shaped bracket 24 of the previously described embodiment.

To erect the more permanent modular decking system, the ends of the first and second horizontal beams 140, 150 are positioned above the connection hub 120. They are then lowered until the ends contact the base plate 122 of the connection hub 120. Bolts are then fed through the holes 132 formed into the walls 131 of the formations 130 and also through the holes 141, 151 formed in the first and second beams 140, 150 respectively. The bolts are retained in place using nuts. Second horizontal beams 150 are then lowered into the U-shaped brackets 142 and these are secured in place by feeding bolts through the holes 143 in the U-shaped brackets 142 and the second horizontal beams 151. Nuts are again used to retain the bolts in place. Decking panels 55 are then secured in place in the same manner as described for the previous embodiment.

The one or more embodiments are described above by way of example only. Many variations are possible without departing from the scope of protection of the invention which is only defined by the appended claims.

## Claims

1. A modular decking system comprising:
- a decking panel (55);
- a plurality of vertical supports (51);
- at least two first horizontal supports (20);
- at least two second horizontal supports (30) arranged perpendicular to the first horizontal supports (20),
- one or more third horizontal supports (40) arranged between the first horizontal supports (20) and parallel to the second horizontal supports (30), and
- a plurality of connectors (1) for detachably coupling the first and second horizontal supports (20), (30), the connectors (1) comprising a connection hub (11) having formations (15) that enable the connection hub (11) to slidingly engage with a reciprocating formation (21), (31) present at the end of the first and second horizontal supports (20), (30), a base plate (13), a top plate (12) and an elongate tube (10) adapted for insertion into the vertical supports (51) which protrudes beyond the top plate, whereby the formations (15) are welded to the elongate tube (10), extend axially between the top plate (12) and the base plate (13) and are arranged around the periphery of the elongate tube (10), the reciprocating formations (21), (31) at the respective ends of the first and second horizontal supports (20), (30) are slidingly engaged with the formations (15) of the connection hub (11) and the top plate (12) is adapted to accommodate the formations (15) and comprises correspondingly shaped cut outs.

2. A modular decking system according to claim 1, wherein the connectors (1) comprise a plurality of struts (14) that extend between an underside of the base plate (13) and the elongate tube (10).

3. A modular decking system according to claim 1 or claim 2, wherein the connection hub (11) comprises a female part and the ends of the first and second horizontal supports (20), (30) each comprise a complementary male part for sliding engagement with the female part or wherein the connection hub (11) comprises a male part and the ends of the first and second horizontal supports (20), (30) each comprise a complementary female part for sliding engagement with the male part.

4. A modular decking system according to claim 3, wherein the male part has a circular cross-section, a diamond-shaped cross-section, a square-shaped cross-section or a rectangular-shaped cross-section when viewed in plan, and optionally wherein the male part is connected to the first and second horizontal supports (20), (30) or to the connection hub (11) via a stem (22), (32).

5. A modular decking system according to any preceding claim, wherein the respective ends of the first and second horizontal supports (20), (30) are secured to the connection hub (11) by fastening means, and optionally wherein the fastening means comprise a bolted connection.

6. A modular decking system according to any preceding claim, wherein the first horizontal supports (20) are provided with U-shaped brackets (24) which are adapted to receive a coupling part (42) present at the ends of the third horizontal supports (40).

7. A modular decking system according to claim 6 wherein the ends of the third horizontal supports (40) comprise an overhang portion (41) from which the coupling part (42) downwardly depends, and optionally wherein the coupling part (42) is substantially J-shaped or hook-shaped.

8. A modular decking system according to any preceding claim, wherein a portion of each decking panel (55) is secured between the top plate (12) of the connection hub (11) and a decking panel retainer (56), and optionally wherein a portion of each decking panel (55) is secured between a captivation detail (23) located on the top surface of the first horizontal support (20) and a decking panel retainer (56).

9. A modular decking system according to any preceding claim, wherein the decking system comprises a tower, and optionally wherein the tower is secured to two or more third horizontal supports (40), wherein the third horizontal supports (40) to which the tower is secured are fixed to the first horizontal supports (20) by a bolted connection.

10. A connector (1) for a modular decking system, the connector comprising an elongate tube (10) adapted for insertion into a vertical support (51) and a connection hub (11) that comprises formations (15) that enable the connection hub (11) to slidingly engage with reciprocating formations (21, 31) present at the ends of two or more horizontal supports 20, **characterised in that** the connection hub (11) comprises a top plate (12) beyond which the elongate tube (10) protrudes and a base plate (13) on which the horizontal supports rest in use, wherein the top plate (12) is adapted to accommodate the formations (15) and comprises correspondingly shaped cut outs, the formations (15) are welded to the elongate tube (10), extend axially between the top plate (12) and the base plate (13) and are arranged around the periphery of the elongate tube (10).

11. A connector (1) according to claim 10, wherein the connection hub (11) comprises a plurality of struts (14) that extend between an underside of the base plate (13) and the elongate tube (10).

12. A connector (1) according to claim 10 or claim 11, wherein the connection hub (11) comprises a female part or a male part adapted for sliding interengagement with the respective ends of the horizontal supports (20), (30), and optionally wherein the male part or female part extends between the top plate (12) of the connection hub (11) and the base plate (13).

13. A connector (100) according any of claims 10 to 12, wherein the connection hub (120) comprises an aperture (132) which is configured to receive a fastener for securing the connection hub (120) and the respective ends of the horizontal supports (140), (150) together.

14. A method of assembling a modular decking system, the method comprising the steps of:
- providing a plurality of vertical supports (51);
- inserting a connector (1) into each vertical support (51), wherein each connector (1) comprises an elongate tube (10) adapted for insertion into the vertical support (51) and a connection hub (11) adapted to enable interconnection of a first horizontal support (20) and a second horizontal support (30), wherein the connection hub (11) comprises formations (15) that enable the connection hub (11) to slidingly engage with reciprocating formations (21, (31) present at the ends of the first and second horizontal supports (20), (30), whereby the connection hub (11) comprises a top plate (12) beyond which the elongate tube (10) protrudes and a base plate (13) on which the horizontal supports (20), (30) rest in use, wherein the top plate (12) is adapted to accommodate the formations (15) and comprises correspondingly shaped cut outs, the formations (15) are welded to the elongate tube (10), extend axially between the top plate (12) and the base plate (13) and are arranged around the periphery of the elongate tube (10);
- interconnecting the first horizontal support (20) and the second horizontal support (30) to the connection hub (11) through sliding interengagement;
- fixing one or more third horizontal supports (40) between the first horizontal supports (20) to define a support frame, and
- securing one or more decking panels (55) to the support frame.

15. A method according to claim 14, wherein fixing the or each third horizontal support (40) to the first horizontal support (20) comprises the step of rotating the third or each third horizontal support (40) relative to the first horizontal supports (20), and optionally wherein the method comprises step of securing the ends of the first and/or second horizontal supports (20), (30) to the connection hub (11) using a bolted connection.

## Patentansprüche

1. Ein Modulares Decksystem, umfassend:
- eine Deckplatte (55);
- eine Mehrzahl von vertikalen Stützen (51);
- mindestens zwei erste horizontale Stützen (20);
- mindestens zwei zweite horizontale Stützen (30), die senkrecht zu den ersten horizontalen Stützen (20) angeordnet sind,
- eine oder mehrere dritte horizontale Stützen (40), die zwischen den ersten horizontalen Stützen (20) und parallel zu den zweiten horizontalen Stützen (30) angeordnet sind, und
- eine Mehrzahl von Konnektoren (1) zum lösbaren Verbinden der ersten und zweiten horizontalen Stützen (20), (30), wobei die Konnektoren (1) eine Verbindungsnabe (11) umfassen, die Formationen (15) aufweist, die es der Verbindungsnabe (11) ermöglichen, gleitend mit einer reziproken Formation (21), (31) in Eingriff zu kommen, die an dem Ende der ersten und zweiten horizontalen Stützen (20), (30) vorhanden ist,
eine Grundplatte (13), eine obere Platte (12) und ein längliches Rohr (10), das dazu eingerichtet ist, in die vertikalen Stützen (51) eingesetzt zu werden, das über die obere Platte vorsteht, wobei die Formationen (15) mit dem länglichen Rohr (10) verschweißt sind, sich axial zwischen der oberen Platte (12) und der Grundplatte (13) erstrecken und um den Umfang des länglichen Rohrs (10) angeordnet sind, wobei die reziproken Formationen (21), (31) an den jeweiligen Enden der ersten und zweiten horizontalen Stützen gleitend mit den Formationen (15) der Verbindungsnabe (11) in Eingriff kommen und die obere Platte (12) dazu eingerichtet ist, die Formationen (15) aufzunehmen und umfasst entsprechend geformte Ausnehmungen.

2. Modulares Decksystem gemäß Anspruch 1, wobei die Konnektoren (1) eine Mehrzahl von Streben (14) umfassen, die sich zwischen einer Unterseite der Grundplatte (13) und dem länglichen Rohr (10) erstrecken.

3. Modulares Decksystem gemäß Anspruch 1 oder Anspruch 2, wobei die Verbindungsnabe (11) ein weibliches Teil umfasst und die Enden der ersten und zweiten horizontalen Stützen (20), (30) jeweils ein komplementäres männliches Teil zum gleitenden Eingriff mit dem weiblichen Teil umfassen, oder wobei die Verbindungsnabe (11) ein männliches Teil umfasst und die Enden der ersten und zweiten horizontalen Stützen (20), (30) jeweils ein komplementäres weibliches Teil zum gleitenden Eingriff mit dem männlichen Teil umfassen.

4. Modulares Decksystem gemäß Anspruch 3, wobei der männliche Teil in der Draufsicht einen kreisförmigen Querschnitt, einen rautenförmigen Querschnitt, einen quadratischen Querschnitt oder einen rechteckigen Querschnitt aufweist, und optional wobei der männliche Teil mit den ersten und zweiten horizontalen Stützen (20), (30) oder mit der Verbindungsnabe (11) mittels einer Stange (22), (32) verbunden ist.

5. Modulares Decksystem gemäß einem der vorhergehenden Ansprüche, wobei die jeweiligen Enden der ersten und zweiten horizontalen Stützen (20), (30) durch Befestigungsmittel an der Verbindungsnabe (11) gesichert sind, und optional wobei die Befestigungsmittel eine Bolzenverbindung umfassen.

6. Modulares Decksystem gemäß einem der vorhergehenden Ansprüche, wobei die ersten horizontalen Stützen (20) mit U-förmigen Klammern (24) bereitgestellt sind, die zur Aufnahme eines Kupplungsteils (42) eingerichtet sind, das an den Enden der dritten horizontalen Stützen (40) vorhanden ist.

7. Modulares Decksystem gemäß Anspruch 6, wobei die Enden der dritten horizontalen Stützen (40) einen Überhangabschnitt (41) umfassen, von dem das Kupplungsteil (42) nach unten herabhängt, und optional wobei das Kupplungsteil (42) im Wesentlichen J-förmig oder hakenförmig ist.

8. Modulares Decksystem gemäß einem der vorhergehenden Ansprüche, wobei ein Stück jeder Deckplatte (55) zwischen der oberen Platte (12) der Verbindungsnabe (11) und einer Deckplattenhalterung (56) befestigt ist, und optional wobei ein Stück jeder Deckplatte (55) zwischen einem auf der Oberseite der ersten horizontalen Stütze (20) angeordneten Einfassungbauteil (23) und einer Deckplattenhalterung (56) gesichert ist.

9. Modulares Decksystem gemäß einem der vorhergehenden Ansprüche, wobei das Decksystem einen Turm umfasst, und optional wobei der Turm an zwei oder mehr dritten horizontalen Stützen (40) gesichert ist, wobei die dritten horizontalen Stützen (40), an denen der Turm gesichert ist, an den ersten horizontalen Stützen (20) durch eine Bolzenverbindung befestigt sind.

10. Konnektor (1) für ein modulares Decksystem, wobei der Konnektor ein längliches Rohr (10), das zum Einsetzen in eine vertikale Stütze (51) eingerichtet ist, und eine Verbindungsnabe (11) umfasst, die Formationen (15) umfasst, die es der Verbindungsnabe (11) ermöglichen, gleitend in reziproke Formationen (21, 31) einzugreifen, die an den Enden von zwei oder mehr horizontalen Stützen (20) vorhanden sind, **dadurch gekennzeichnet, dass** die Verbindungsnabe (11) eine Oberseite (12), über die das längliche Rohr (10) vorsteht, und eine Grundplatte (13) umfasst, auf der die horizontalen Stützen bei Verwendung ruhen, wobei die obere Platte (12) zur Aufnahme der Formationen (15) eingerichtet ist und entsprechend geformte Ausnehmungen umfasst, die Formationen (15) mit dem länglichen Rohr (10) verschweißt sind, sich axial zwischen der oberen Platte (12) und der Grundplatte (13) erstrecken und um den Umkreis des länglichen Rohres (10) angeordnet sind.

11. Konnektor (1) gemäß Anspruch 10, wobei die Verbindungsnabe (11) eine Mehrzahl von Streben (14) umfasst, die sich zwischen einer Unterseite der Grundplatte (13) und dem länglichen Rohr (10) erstrecken.

12. Konnektor (1) gemäß Anspruch 10 oder Anspruch 11, wobei die Verbindungsnabe (11) ein weibliches Teil oder ein männliches Teil umfasst, das für einen gleitenden Eingriff mit den jeweiligen Enden der horizontalen Stützen (20), (30) eingerichtet ist, und optional wobei sich das männliche Teil oder das weibliche Teil zwischen der oberen Platte (12) der Verbindungsnabe (11) und der Grundplatte (13) erstreckt.

13. Konnektor (100) gemäß einem der Ansprüche 10 bis 12, wobei die Verbindungsnabe (120) eine Öffnung (132) umfasst, die ausgebildet ist, um ein Befestigungsmittel zum Sichern der Verbindungsnabe (120) und der jeweiligen Enden der horizontalen Stützen (140), (150) miteinander aufzunehmen.

14. Verfahren zum Zusammensetzen eines modularen Decksystems, wobei das Verfahren die Schritte umfasst:
- Bereitstellen einer Mehrzahl von vertikalen Stützen (51);
- Einsetzen eines Konnektors (1) in jede vertikale Stütze (51), wobei jeder Konnektor (1) ein längliches Rohr (10), das zum Einsetzen in die vertikale Stütze (51) eingerichtet ist, und eine Verbindungsnabe (11) umfasst, die eingerichtet ist, um die Verbindung einer ersten horizontalen Stütze (20) und einer zweiten horizontalen Stütze (30) miteinander zu ermöglichen, wobei die Verbindungsnabe (11) Formationen (15) umfasst, die es der Verbindungsnabe (11) ermöglichen, gleitend in reziproke Formationen (21, (31) einzugreifen, die an den Enden der ersten und zweiten horizontalen Stützen (20), (30) vorhanden sind, wobei die Verbindungsnabe (11) eine Oberseite (12), über die das längliche Rohr (10) vorsteht, und eine Grundplatte (13) umfasst, auf der die horizontalen Stützen (20), (30) bei Verwendung ruhen, wobei die obere Platte (12) zur Aufnahme der Formationen (15) eingerichtet ist und entsprechend geformte Ausnehmungen umfasst, die Formationen (15) mit dem länglichen Rohr (10) verschweißt sind, sich axial zwischen der oberen Platte (12) und der Grundplatte (13) erstrecken und um den Umkreis des länglichen Rohres (10) angeordnet sind;
- Verbinden der ersten horizontalen Stütze (20) und der zweiten horizontalen Stütze (30) mit der Verbindungsnabe (11) durch gleitendes Ineinandergreifen;
- Befestigen einer oder mehrerer dritter horizontaler Stützen (40) zwischen den ersten horizontalen Stützen (20), um einen Stützrahmen zu bilden, und
- Sichern einer oder mehrerer Deckplatten (55) an dem Stützrahmen.

15. Verfahren gemäß Anspruch 14, wobei das Befestigen der oder jeder dritten horizontalen Stütze (40) an der ersten horizontalen Stütze (20) den Schritt des Rotierens der dritten oder jeder dritten horizontalen Stütze (40) relativ zu den ersten horizontalen Stützen (20) umfasst, und optional wobei das Verfahren den Schritt des Sicherns der Enden der ersten und/oder zweiten horizontalen Stützen (20), (30) an der Verbindungsnabe (11) unter Verwendung einer Bolzenverbindung umfasst.

## Revendications

1. Système de plancher modulaire comprenant :
- un panneau (55) de plancher ;
- une pluralité de supports (51) verticaux ;
- au moins deux premiers supports (20) horizontaux ;
- au moins deux deuxièmes supports (30) horizontaux disposés perpendiculairement aux premiers supports (20) horizontaux ;
- un ou plusieurs troisièmes supports (40) horizontaux disposés entre les premiers supports (20) horizontaux et parallèlement aux deuxièmes supports (30) horizontaux, et
- une pluralité de raccords (1) pour accoupler de manière amovible les premiers et deuxièmes supports (20), (30) horizontaux, les raccords (1) comprenant un plot (11) de raccordement ayant des conformations (15), qui permettent au plot (11) de raccordement d'être pénétré à coulissement par une conformation (21), (31) conjuguée présente à l'extrémité des premiers et deuxièmes supports (20), (30) horizontaux, un plateau (13) de base, une plaque (12) de sommet et un tube (10) oblong propre à être inséré dans les supports (51) verticaux, qui fait saillie au-delà de la plaque de sommet,
dans lequel les conformations (15) sont soudées au tube (10) oblong, s'étendent axialement entre la plaque (12) de sommet et le plateau (13) de base et sont disposées autour de la périphérie du tube (10) oblong, les conformations (21), (31) conjuguées aux extrémités respectives des premiers et deuxièmes supports (20), (30) horizontaux pénètrent à coulissement dans les conformations (15) du plot (11) de raccordement et la plaque (12) de sommet est propre à loger les conformations (15) et comprend des découpes conformées de manière correspondante.

2. Système de plancher modulaire suivant la revendication 1, dans lequel les raccords (1) comprennent une pluralité d'étais (14), qui s'étendent entre une face inférieure du plateau (13) de base et le tube (10) oblong.

3. Système de plancher modulaire suivant la revendication 1 ou la revendication 2, dans lequel le plot (11) de raccordement comprend une partie femelle et les extrémités des premiers et deuxièmes supports (20), (30) horizontaux comprennent chacune une partie mâle complémentaire de pénétration à coulissement dans la partie femelle ou dans lequel le plot (11) de raccordement comprend une partie mâle et les extrémités des premiers et deuxièmes supports (20), (30) comprennent chacun une partie femelle complémentaire pour pénétration à coulissement par la partie mâle.

4. Système de plancher modulaire suivant la revendication 3, dans lequel la partie mâle a une section transversale circulaire, une section transversale en forme de losange, une section transversale en forme de carré ou une section transversale en forme de rectangle tel que vu en plan, et dans lequel éventuellement la partie mâle est raccordée aux premiers et aux deuxièmes supports (20), (30) horizontaux ou au plot (11) de raccordement par une tige (22), (32).

5. Système de plancher modulaire suivant n'importe quelle revendication précédente, dans lequel les extrémités respectives des premiers et deuxièmes supports (20), (30) horizontaux sont assujettis au plot (11) de raccordement par des moyens de fixation, et dans lequel éventuellement les moyens de fixation comprennent un raccordement boulonné.

6. Système de plancher modulaire suivant n'importe quelle revendication précédente, dans lequel les premiers supports (20) horizontaux sont pourvus de consoles (24) en forme de U, qui sont propres à recevoir une partie (42) d'accouplement présente aux extrémités des troisièmes supports (40) horizontaux.

7. Système de plancher modulaire suivant la revendication 6, dans lequel les extrémités des troisièmes supports (40) horizontaux comprennent une partie (41) en porte à faux dont pend vers le bas la partie (42) d'accouplement, et dans lequel éventuellement la partie (42) d'accouplement est sensiblement en forme de J ou en forme de crochet.

8. Système de plancher modulaire suivant n'importe quelle revendication précédente, dans lequel une partie de chaque panneau (55) de plancher est assujettie entre la plaque (12) de sommet du plot (11) de raccordement et une retenue (56) du panneau de plancher, et dans lequel éventuellement une partie de chaque panneau (55) de plancher est assujettie entre une prise (23) située sur la surface de sommet du premier support (20) horizontal et une retenue (56) du panneau de plancher.

9. Système de plancher modulaire suivant n'importe quelle revendication précédente, dans lequel le système de plancher comprend une tour, et dans lequel éventuellement la tour est assujettie à deux ou plusieurs troisièmes supports (40) horizontaux, dans lequel les troisièmes supports (40) horizontaux auxquels, la tour est assujettie, sont fixés aux premiers supports (20) horizontaux par un raccordement boulonné.

10. Raccord (1) pour un système de plancher modulaire, le raccord comprenant un tube (10) oblong propre à être inséré dans un support (51) vertical et un plot (11) de raccordement, qui comprend des conformations (15) qui permettent au plot (11) de raccordement d'être pénétré à coulissement par des conformations (21, 31) conjuguées présentes aux extrémités de deux ou plusieurs supports 20 horizontaux, **caractérisé en ce que** le plot (11) de raccordement comprend une plaque (12) de sommet, au-delà duquel le tube (10) oblong fait saillie, et un plateau (13) de base, sur lequel les supports horizontaux reposent en utilisation, dans lequel la plaque (12) de sommet est propre à loger les conformations (15) et comprend des découpes conformées de manière correspondante, les conformations (15) sont soudées au tube (10) oblong, s'étendent axialement entre la plaque (12) de sommet et le plateau (13) de base et sont disposées autour de la périphérie du tube (10) oblong.

11. Raccord (1) suivant la revendication 10, dans lequel le plot (11) de raccordement comprend une pluralité d'étais (14) qui s'étendent entre une face inférieure du plateau (13) de base et le tube (10) oblong.

12. Raccord (1) suivant la revendication 10 ou la revendication 11, dans lequel le plot (11) de raccordement comprend une partie femelle ou une partie mâle propre à s'interpénétrer à coulissement avec les extrémités respectives des supports (20), (30) horizontaux, et dans lequel éventuellement la partie mâle ou la partie femelle s'étend entre la plaque (12) de sommet du plot (11) de raccordement et le plateau (13) de base.

13. Raccord (100) suivant n'importe laquelle des revendications 10 à 12, dans lequel le plot (120) de raccordement comprend une ouverture (132), qui est configurée pour recevoir une fixation pour assujettir le plot (120) de raccordement et les extrémités respectives des supports (140), (150) horizontaux ensemble.

14. Procédé d'assemblage d'un système de plancher modulaire, le procédé comprenant les stades dans lesquels :
- on se procure une pluralité de supports (51) verticaux ;
- on insère un raccord (1) dans chaque support (51) vertical, dans lequel chaque raccord (1) comprend un tube (10) oblong propre à être inséré dans le support (51) vertical et un plot (11) de raccordement propre à permettre un raccordement entre un premier support (20) horizontal et un deuxième support (30) horizontal, dans lequel le plot (11) de raccordement comprend des conformations (15), qui permet au plot (11) de raccordement d'être pénétré à coulissement par des conformations (21), (31) conjuguées présentes aux extrémités des premiers et deuxièmes supports (20), (30) horizontaux, dans lequel le plot (11) de raccordement comprend une plaque (12) de sommet, au-delà de laquelle le tube (10) oblong fait saillie, et un plateau (13) de base, sur lequel les supports (20), (30) horizontaux reposent en utilisation, dans lequel la plaque (12) de sommet est propre à loger les conformations (15) et comprend des découpes conformées de manière correspondante, les conformations (15) sont soudées au tube (10) oblong, s'étendent axialement entre la plaque (12) de sommet et le plateau (13) de base et sont disposées autour de la périphérie du tube (10) oblong ;
- on raccorde le premier support (20) horizontal et le deuxième support (30) horizontal au plot (11) de raccordement entre eux par interpénétration à coulissement ;
- on fixe un ou plusieurs troisièmes supports (40) horizontaux entre les premiers supports (20) horizontaux pour définir un cadre de support, et
- on assujettit un ou plusieurs panneaux (55) de plancher au cadre de support.

15. Procédé suivant la revendication 14, dans lequel fixer le ou chaque troisième support (40) horizontal au premier support (20) horizontal comprend le stade de faire tourner le troisième ou chaque support (40) horizontal par rapport aux premiers supports (20) horizontaux, et dans lequel éventuellement le procédé comprend le stade d'assujettir les extrémités des premiers et/ou deuxièmes supports (20), (30) horizontaux au plot (11) de raccordement en utilisant un raccordement boulonné.
